# EUROPEAN PATENT SPECIFICATION

(11) **EP 3 294 061 B1**
(45) Date of publication and mention of the grant of the patent: **09.07.2025**
(21) Application number: 16734479.5
(22) Date of filing: 13.05.2016
(51) Int. Cl.: A01N 25/04, A01N 25/30, A01N 43/56, A01N 43/80, C05C 3/00, C05F 11/00, C05G 3/50, C05G 5/27, C05G 3/70

(54) **ADJUVANT FOR AGROCHEMICALS**
ADJUVANS FÜR AGROCHEMIKALIEN
ADJUVANT POUR PRODUITS AGROCHIMIQUES

(30) Priority: 15.05.2015 PL 41235815
(43) Date of publication of application: 21.03.2018
(73) Proprietor: Szewczyk, Roman, 32-005 Niepolomice (PL)
(72) Inventor: SZEWCZYK, Roman, 32-005 Niepolomice (PL); WOZNICA, Zenon, 60-194 Poznan (PL); KUCHARSKI, Mariusz, 50-566 Wroclaw (PL)
(74) Representative: Górska, Anna
(86) International application number: PCT/PL2016/050018
(87) International publication number: WO 2016/186529

(56) References cited:
- WO-A2-2008/155108
- JP-A- H09 143 006
- US-A1- 2005 026 786
- OPM #120765: "Manufactured For HELENA CHEMICAL COMPANY 225 SCHILLING BOULEVARD, SUITE 300 @BULLET COLLIERVILLE, TENNESSEE 38017 DEPOSITION AID *PRINCIPAL FUNCTIONING AGENTS: Mineral Oil", 31 December 2012 (2012-12-31), XP055295191, Retrieved from the Internet <URL:http://www.agrian.com/pdfs/Grounded-W_Label.pdf> [retrieved on 20160812]

## Description

This invention relates to an adjuvant for agrochemicals, ie. for plant protection products, biostimulators, fertilisers, etc., for soil or foliar applied agrochemicals.

For example, there are known adjuvants, described in US patents, intended to increase infiltration and more even distribution of water in the soil, which is especially important for the irrigation of very overdried soils. Adjuvants intended for this purpose contain either surfactants from the group of specific oxyethyl or oxypropyl block copolymers (patent US7541386) or a mixture thereof with non-ionic surfactants from the group of alkyl polyglucosides (patent US6851219), or anionic substances of alkyl polyglucoside surfactant derivatives (patent application US2011/0176872). Multi-component mixtures which contain non-ionic surfactants from the group of alkylphenol oxyethyls or mixtures thereof, fulvic acid, polyacrylamide and alkanol having a carbon number of 1 to 12 (patent US7976248) are also described. In order to reduce the hydrophobicity of the greenhouse substrate, an adjuvant formulation intended as an additive to irrigation water was also developed (patent US7587857), wherein the formulation contains a surfactant or a mixture of surfactants from the group of sugar alcohols (polyols). In US patent application US2007/0149409, a pesticide formulation is also described, wherein it allows reduction of washout of active substances from the soil, increases their uptake by the roots, and at the post-emergence treatment, it also facilitates retaining of spray liquid droplets on the leaves. This formulation contains, in addition to pesticide active ingredient (e.g. herbicide, fungicide, insecticide), a polymer or a mixture of polymers based on modified cellulose, glucan, starch, dextran, chitosan and derivatives of these polymers. In US patent application US2014/0256556, an oil-water emulsion is also described which is applied to the soil in very high volumes (80 to 800 gallons/acre, i.e. from approx. 750 to 7500 l/ha) in order to help the fungicide reach the tree roots thus protected against diseases. In patent application US2014/0200139, formulations of herbicides from the group of synthetic auxins (growth regulators) are described, wherein they have an enhanced ability to maintain the active substance in the soil thanks to the content of specific sorbents (eg. from the group of silicon compounds) and cationic surfactants. In agricultural practice of many countries, an adjuvant reserved for certain herbicides applied to the soil is used which is based on a mixture of a non-oxyethylenated or propoxyethylenated alkanolamide surfactant and optionally other components and which maintains a high pH of the spray liquid, thereby providing an increased solubility of the ingredients contained therein and therefore preventing deposition thereof on walls of the tank (patent US5906961).

US 2005/026786A1 discloses an oil suspension also based on a mixture of paraffin oil and rapeseed oil methyl ester. More particularly, it describes an oil suspension concentrate which is composed of a paraffin oil (Bayol^{®}82), rapeseed oil methyl ester (Edenor^{®}MESU), and a mixture of surfactant comprising polyethoxylated castor oil, sulfosuccinate sodium salt and an ethoxylated alcohol.

The presented adjuvants for treatments related to irrigation, especially of overdried soils, and for treatments related to the use of some agrochemicals are mainly based on surfactants or mixtures thereof. For this reason, they are not able to comprehensively fulfil such essential requirements for agrochemicals applied to the soil as: uniform coverage of the soil surface, thorough penetration of the soil, with, however, simultaneous prevention from their fast leaching downward into a soil profile. Lack of such comprehensive activity of the adjuvants developed so far does not guarantee the full effectiveness of agrochemicals used, does not protect cultivated plants against damages (which is particularly important in the case of displacement of herbicides applied to the soil into the zone of sensitive cultivated plants), and does not limit the possibility of contamination of groundwater and environment by chemical substances moving down the soil. This also applies to the lack, in the prior art, of complex impact of the adjuvants developed so far on the prevention of hydrolytic degradation of plant protection products in spray liquids with pH above 7 and, at the same time, guaranteeing their good retention on the leaves and penetration into plant cells.

The aim of the invention is to develop an adjuvant for soil or foliar applied agrochemicals, acting in a comprehensive manner on the important factors determining the biological activity of these products and reducing, at the same time, their effect on damages of cultivated plants and on environmental contamination. It is assumed that the developed adjuvant may also be optionally used with agrochemicals applied on the leaves in the form of spraying of plants after their emergence, facilitating retention of the spray liquid on the leaves or pests and enhancing absorption of biologically active substances (macro and micro foliar fertilisers, biostimulators and growth regulators, as well as various pesticides - herbicides, fungicides and insecticides) to the plant cells or the cells of controlled diseases and pests.

The invention is an adjuvant for soil or foliar applied agrochemicals, containing:
40% by weight of N-150 base paraffin oil having a viscosity of 27 mm2/s at 40°C and a density of 0.85 g/cm3 at 15°C, and,
40% by weight of methyl ester of fatty acids of rapeseed oil having a viscosity of 4 mm2/s at 20°C and a density of 0.85 g/cm3 and
20% by weight of an emulsifying-wetting component, characterised in that the emulsifying-wetting component is a multicomponent mixture of surfactants having emulsifying and wetting properties which is:
   a) 5% by weight of ethoxylated coconut alkyldimethylamine,
   b) 5% by weight of ethoxylated castor oil,
   c) 2% by weight of C16-18 ethoxylated alkyl amine and
   d) 8% by weight of composition of surfactants of polymer nature is:
      4% by weight of phosphate diethanolamine salts of C12-14 polyethoxylated alcohol, and 2% by weight of C9-11 linear ethoxylated alcohol, and 2% by weight of sodium salt of succinic acid monoester of oxethylated nonylphenol.

It was surprisingly found that the use of the components of the adjuvant of claim 1 made it possible to obtain a clear, homogeneous and storage-stable adjuvant formulation which forms,
in the spray liquid, a stable oil-water emulsion which:
(a) evenly covers the soil surface and thoroughly penetrates its top layer, reduces washout of agrochemicals, e.g. herbicides, contained in the spray liquid, and allows improvement of their biological efficacy; and/or
(b) uniformly covers leaves of cultivated plants, improves the performance of plant protection products and biostimulators, e.g. microelement zinc fertilisers in the chelated form.

Advantages of the adjuvant become apparent under any soil and climatic conditions, particularly under extremely adverse conditions under which agrochemicals are used, eg. soil drought not allowing the used product to reach the target of action or uptake site, as well as with excessive falls causing fast washout of the used agrochemicals down the soil, particularly in light soils with low sorption capacity. An important advantage of the adjuvant according to the invention is the possibility of its use with foliar applied agrochemicals in order to acidify the spray liquid and to prevent hydrolytic degradation of pesticides, especially fungicides and insecticides, under conditions where the spray liquid is basic (pH above 7), to facilitate retention of spray liquid droplets on the leaves and to improve penetration of biologically active substances into plant cells. The adjuvant according to the invention allows a more uniform distribution of agrochemicals on the surface and in the soil profile, while preventing their washout by precipitations. This leads to an increaseed efficacy of agrochemicals used,
especially in adverse conditions, and makes them more safe for cultivated plants and the environment. The adjuvant according to the present invention exhibits biostability, i.e. absence of microbial growth and stability in the temperature range of -10°C to +55°C during storage for a period of at least 24 months. When added to the spray liquid in a concentration of 0.25-2%, they form a stable oil-water emulsion sustained for at least 12 hours.

The adjuvant composition according to the invention is shown in embodiments and behaviour examples under practical conditions:

### Example I

In a container equipped with a mechanical stirrer, the following was placed:
1) 400 g of N-150 base paraffin oil having a viscosity of 27 mm²/s at 40°C and a density of 0.85 g/cm³ at 15°C,
2) 400 g of methyl ester of fatty acids of rapeseed oil having a viscosity of 4 mm²/s at 20°C and a density of 0.85 g/cm³,
3) 50 g of ethoxylated coconut alkyldimethylamine,
4) 50 g of ethoxylated castor oil,
5) 40 g of phosphate diethanolamine salt of C12-14 polyethoxylated alcohol,
6) 20 g of C16-18 ethoxylated alkyl amine,
7) 20 g of C9-11 linear ethoxylated alcohol,
8) 20 g of sodium salt of succinic acid monoester of oxethylated nonylphenol.

The whole was mixed at a temperature of 20°C for a period of about 10 min. to a complete homogenisation of the mixture. A clear, homogeneous composition of a light brown colour was obtained, having a density of 0.88 g/cm³ and a viscosity of 12 mm²/s at 20°C, containing 40% by weight of paraffin oil, 40% by weight of methyl ester of fatty acids of rapeseed oil, 5% by weight of ethoxylated coconut alkyldimethylamine, 5% by weight of ethoxylated castor oil, 4% by weight of phosphate diethanolamine salt of C12-14 polyethoxylated alcohol, 2% by weight of C16-18 ethoxylated alkyl amine, 2% by weight of C9-11 linear ethoxylated alcohol and 2% by weight of sodium salt of succinic acid monoester of oxethylated nonylphenol.

### Example II - comparative example

In a container equipped with a mechanical stirrer, the following was placed:
1) 100 g of N-150 base paraffin oil having a viscosity of 27 mm²/s at 40°C and a density of 0.85 g/cm³ at 15°C,
2) 100 g of methyl ester of fatty acids of rapeseed oil having a viscosity of 4 mm²/s at 20°C and a density of 0.85 g/cm³,
3) 200 g of ethoxylated coconut alkyldimethylamine,
4) 200 g of ethoxylated castor oil,
5) 160 g of phosphate diethanolamine salt of C12-14 polyethoxylated alcohol,
6) 80 g of C16-18 ethoxylated alkyl amine,
7) 80 g of C9-11 linear ethoxylated alcohol,
8) 80 g of sodium salt of succinic acid monoester of oxethylated nonylphenol.

The whole was mixed at a temperature of 20°C for a period of about 10 min. to a complete homogenisation of the mixture. A clear, homogeneous composition of a light brown colour was obtained, having a density of 0.95 g/cm³ and a viscosity of 10 mm²/s at 20°C, containing 10% by weight of paraffin oil, 10% by weight of methyl ester of fatty acids of rapeseed oil, 20% by weight of ethoxylated coconut alkyldimethylamine, 20% by weight of ethoxylated castor oil, 16% by weight of phosphate diethanolamine salt of C12-14 polyethoxylated alcohol, 8% by weight of C16-18 ethoxylated alkyl amine, 8% by weight of C9-11 linear ethoxylated alcohol and 8% by weight of sodium salt of succinic acid monoester of oxethylated nonylphenol.

### Example III - comparative example

In a container equipped with a mechanical stirrer, the following was placed:
1) 450 g of N-150 base paraffin oil having a viscosity of 27 mm²/s at 40°C and a density of 0.85 g/cm³ at 15°C,
2) 450 g of methyl ester of fatty acids of rapeseed oil having a viscosity of 4 mm²/s at 20°C and a density of 0.85 g/cm³,
3) 25 g of ethoxylated coconut alkyldimethylamine,
4) 25 g of ethoxylated castor oil,
5) 20 g of phosphate diethanolamine salt of C12-14 polyethoxylated alcohol,
6) 10 g of C16-18 ethoxylated alkyl amine,
7) 10 g of C9-11 linear ethoxylated alcohol,
8) 10 g of sodium salt of succinic acid monoester of oxethylated nonylphenol.

The whole was mixed at a temperature of 20°C for a period of about 10 min. to a complete homogenisation of the mixture. A clear, homogeneous composition of a light brown colour was obtained, having a density of 0.89 g/cm³ and a viscosity of 14 mm²/s at 20°C, containing 45% by weight of paraffin oil, 45% by weight of methyl ester of fatty acids of rapeseed oil, 2.5% by weight of ethoxylated coconut alkyldimethylamine, 2.5% by weight of ethoxylated castor oil, 1% by weight of phosphate diethanolamine salt of C12-14 polyethoxylated alcohol, 1% by weight of C16-18 ethoxylated alkyl amine, 2% by weight of C9-11 linear ethoxylated alcohol and 1% by weight of sodium salt of succinic acid monoester of oxethylated nonylphenol.

### Example IV - comparative example

In a container equipped with a mechanical stirrer, the following was placed:
1) 350 g of N-150 base paraffin oil having a viscosity of 27 mm²/s at 40°C and a density of 0.85 g/cm³ at 15°C,
2) 350 g of methyl ester of fatty acids of rapeseed oil having a viscosity of 4 mm²/s at 20°C and a density of 0.85 g/cm³,
3) 150 g of phosphoric acid ester,
4) 50 g of ethoxylated castor oil,
5) 40 g of phosphate diethanolamine salt of C12-14 polyethoxylated alcohol,
6) 20 g of C16-18 ethoxylated alkyl amine,
7) 20 g of C9-11 linear ethoxylated alcohol,
8) 20 g of sodium salt of succinic acid monoester of oxethylated nonylphenol.

The whole was mixed at a temperature of 20°C for a period of about 10 min. to a complete homogenisation of the mixture. A clear, homogeneous composition of a light brown colour was obtained, having a density of 0.87 g/cm³ and a viscosity of 15 mm²/s at 20°C, containing 35% by weight of paraffin oil, 35% by weight of methyl ester of fatty acids of rapeseed oil, 15% by weight of phosphoric acid ester, 5% by weight of ethoxylated castor oil, 4% by weight of phosphate diethanolamine salt of C12-14 polyethoxylated alcohol, 2% by weight of C16-18 ethoxylated alkyl amine, 2% by weight of C9-11 linear ethoxylated alcohol and 2% by weight of sodium salt of succinic acid monoester of oxethylated nonylphenol.

### Example V

The effect of the adjuvant composition prepared according to Example I on herbicidal effectiveness of herbicide mixture Butisan 400 SC (a.i. metazachlor) + Command 480 EC (a.i. clomazone) used in full doses and reduced doses in winter rape (8 weeks after treatment, field test in 2014 - Experimental Station in Laskowice - IUNG-PIB in Pulawy, Wroclaw Branch).

| Object | Dose (l/ha) | Weed species** | | | | | |
|---|---|---|---|---|---|---|---|
| | | TRZAX | VIOAR | GERPU | CAPBP | MATIN | CHEAL |
| Control | - | 4 pc. /m² | 4 pc. /m² | 47 pc. /m² | 19 pc. /m² | 26 pc. /m² | 4 pc. /m² |
| | | weed control (%) | | | | | |
| Butisan 400 S.C. + Command 480 EC | 2 + 0.15 | 19 | 68 | 71 | 72 | 88 | 44 |
| Butisan 400 SC + Command 480 EC + Grounded* | 2 + 0.15 + 0.5 | 25 | 64 | 70 | 72 | 82 | 40 |
| Butisan 400 SC + Command 480 EC + Composition according to Example I | 2 + 0.15 + 0.5 | 28 | 76 | 76 | 86 | 94 | 70 |
| Butisan 400 SC + Command 480 EC | 1.5 + 0.1 | 15 | 61 | 66 | 68 | 81 | 35 |
| Butisan 400 SC + Command 480 EC + Grounded | 2 + 0.1 + 0.5 | 14 | 61 | 62 | 71 | 84 | 35 |
| Butisan 400 S.C. + Command 480 EC + Composition according to Example I | 1.5 + 0.1 + 0.5 | 24 | 70 | 74 | 83 | 93 | 62 |

| | | | | | | | |
|---|---|---|---|---|---|---|---|
| * comparative adjuvant supplied by F&N Agro Polska Sp. z o.o. ** TRZAS = common wheat (*Triticum aestivum*); VIOAR = field pansy (*Viola arvensis*); GERPU= small-flowered crane's-bill (*Geranium pusillum*); CAPBP = shepherd's-purse (*Capsella bursa-pastoris*); MATIN = scentless false mayweed (*Matricaria maritima ssp. inodora*); CHEAL = lamb's quarters (*Chenopodium album*) | | | | | | | |

Conclusion: the adjuvant composition prepared according to Example I of the invention at a dose of 0.5 l/ha significantly contributed to an increase in the herbicidal effectiveness of herbicide mixture Butisan 400 SC + Command 480 EC applied to the soil after sowing the rape, which, with the use of reduced doses of these herbicides, resulted in an a similar or higher herbicidal effectiveness in relation to the full dose, without the adjuvant.

### Example VI

Effect of the adjuvant composition prepared according to Example I on movement of herbicide Butisan 400 SC (a.i. metazachlor) under the influence of simulated rainfall (15 l/m²) used 2 and 20 hours after treatment (IUNG-PIB tests in Pulawy, Wroclaw Branch in 2014).

| Soil layer (cm) | Time of the fall after treatment (h) | Butisan 400 SC 2 l/ha | Butisan 400 SC 2 l/ha + Grounded* 0.5 l/ha | Butisan 400 SC + composition according to Example I 0.5 l/ha |
|---|---|---|---|---|
| | | herbicide residues in the soil (% of the dose applied) | | |
| 0 - 5 | 2 | 66 | 77 | 82 |
| | 20 | 73 | 86 | 90 |
| 5 - 10 | 2 | 26 | 21 | 18 |
| | 20 | 22 | 13 | 10 |
| 10 - 20 | 2 | 8 | 2 | 0 |
| | 20 | 5 | 1 | 0 |

| | | | | |
|---|---|---|---|---|
| * comparative adjuvant supplied by F&N Agro Polska Sp. z o.o. | | | | |

Conclusion: the adjuvant composition prepared according to Example I of the invention at a dose of 0.5 l/ha significantly contributed to the inhibition of washout and displacement of herbicide Butisan 400 SC down the soil by simulated rainfall in an amount of 15 l/m².

### Example VII

Effect of the adjuvant composition prepared according to Example I on the increase in root mass and plant mass in the cultivation of winter rape, when it is used in foliar application, in the presence of various biostimulators. Tests in the embodiment were carried out with the use of winter rape, using the soil of Laskowice type (pH = 4.6, Corg = 0.78). Each experimental system was repeated three times.

In a first test group, a microelement zinc fertiliser in the chelated form was used (product name: Patron, manufacturer: "AGROMIX" Manufacturing and Trading Company). Patron fertiliser improves root development of plants by an increases in root mass and thus preferably influences the growth and yield of rape, cereals, corn and leguminous plants. This fertiliser contains: 7.5% wt/wt of nitrogen (N) in the ammonium form (i.e. 90 g of N-NH2 /l); 8.0% wt/wt of zinc (Zn) dissolvable in water (i.e. 96 g of Zn/l), its density is 1.19 - 1.21 kg/l and pH is within the range of 6 - 7.

The table below shows the effect of using the adjuvant prepared according to Example I on increasing the root mass and the mass of winter rape with the use of a lower dose of Patron biostimulator than the recommended dose.

| Object | Dose [l/ha] | Term of application | Root mass [% of control] | Total mass of plants [% of control] |
|---|---|---|---|---|
| Control (without biostimulator and adjuvant) | - | 2-4 leaves | 100 | 100 |
| Patron (at the recommended dose) | 1.0 | 2-4 leaves | 117.4 | 150.7 |
| Patron (at the lower dose) | 0.75 | 2-4 leaves | 107.6 | 123.3 |
| Patron (at the lower dose) + composition of Example I | 0.75 +0.5 | 2-4 leaves | 114.0 | 144.9 |

Conclusion: Patron biostimulator used at a dose lowered by 25% with the adjuvant composition prepared according to Example I of the invention used at a dose of 0,5 l/ha contributed to the increase in the root mass and the total mass of rape to the level obtained after the use of the recommended dose without the adjuvant.

Also, additional tests were carried out according to the above scheme for other biostimulators, including those containing algae extract (product name: Kelpak; manufacturer: OMEX) and those containing algae extract along with AOC (product name: Denamix Cresco, manufacturer: CHEMIROL). In the case of other biostimulators, the addition of the adjuvant prepared according to Example I at a dose of 0.5 l/ha significantly contributed to the increase in the root mass and plant mass with the lower dose of the aforementioned biostimulators.

### Example VIII - comparative example

Effect of the adjuvant composition prepared according to Example IV on pH of the water used for preparing the spray liquid of agrochemicals

| Object | Adjuvant dose (l/100 l of water) | pH (20°C) |
|---|---|---|
| Tap water | - | 7.4 |
| Tap water + composition of Example IV | 0.25 | 6.9 |
| Tap water + composition of Example IV | 0.5 | 6.7 |
| Tap water + composition of Example IV | 0.75 | 6.2 |
| Tap water + composition of Example IV | 1.0 | 5.8 |

Conclusion: the adjuvant composition prepared according to Example IV added to the spray water influences its gradual acidification and pH decrease as the adjuvant dose decreases from 0.25 to 1.0 litre per 100 l of water, which creates an environment preventing hydrolytic degradation of many pesticides, in particular from the group of fungicides and insecticides.

## Claims

1. An adjuvant for soil or foliar applied agrochemicals, containing:
40% by weight of N-150 base paraffin oil having a viscosity of 27 mm²/s at 40°C and a density of 0.85 g/cm³ at 15°C, and,
40% by weight of methyl ester of fatty acids of rapeseed oil having a viscosity of 4 mm²/s at 20°C and a density of 0.85 g/cm³ and
20% by weight of an emulsifying-wetting component, **characterised in that** the emulsifying-wetting component is a multicomponent mixture of surfactants having emulsifying and wetting properties which is:
a) 5% by weight of ethoxylated coconut alkyldimethylamine,
b) 5% by weight of ethoxylated castor oil,
c) 2% by weight of C16-18 ethoxylated alkyl amine and
d) 8% by weight of composition of surfactants of polymer nature is:
4% by weight of phosphate diethanolamine salts of C12-14 polyethoxylated alcohol, and
2% by weight of C9-11 linear ethoxylated alcohol, and
2% by weight of sodium salt of succinic acid monoester of oxethylated nonylphenol.

## Patentansprüche

1. Hilfsmittel für im Boden oder auf Blättern aufgebrachte Agrochemikalien, enthaltend:
40 Gew.-% Paraffinöl auf N-150-Basis mit einer Viskosität von 27 mm²/s bei 40°C und einer Dichte von 0,85 g/cm³ bei 15°C, und,
40 Gew.-% eines Fettsäuremethylesters von Rapsöl mit einer Viskosität von 4 mm²/s bei 20°C und einer Dichte von 0,85 g/cm³ und
20 Gew.-% einer emulgierend-benetzenden Komponente, **dadurch gekennzeichnet, dass** die emulgierend-benetzende Komponente eine Mehrkomponentenmischung von Tensiden mit emulgierenden und benetzenden Eigenschaften ist, die aus Folgendem besteht:
a) 5 Gew.-% ethoxyliertes Kokosnuss-Alkyldimethylamin,
b) 5 Gew.-% ethoxyliertes Rizinusöl,
c) 2 Gew.-% eines ethoxylierten C16-18-Alkylamins und
d) 8 Gew.-% einer Zusammensetzung von Tensiden mit Polymercharakter ist:
4 Gew.-% Phosphat-Diethanolamin-Salze von polyethoxyliertem C12-14-Alkohol und
2 Gew.-% eines linearen ethoxylierten C9-11-Alkohols, und
2 Gew.-% Natriumsalz des Bernsteinsäuremonoesters von oxethyliertem Nonylphenol.

## Revendications

1. Un adjuvant pour les produits agrochimiques appliqués au sol ou sur les feuilles, contenant :
40 % en poids d'huile de paraffine de base N-150 ayant une viscosité de 27 mm²/s à 40°C et une densité de 0,85 g/cm³ à 15°C et
40 % en poids d'ester méthylique d'acides gras d'huile de colza ayant une viscosité de 4 mm²/s à 20°C et une densité de 0,85 g/cm³, et
20 % en poids d'un composant émulsifiant-mouillant, **caractérisé en ce que** le composant émulsifiant-mouillant est un mélange multicomposant d'agents de surface ayant des propriétés émulsifiantes et mouillantes, qui est :
a) 5 % en poids d'alkyldiméthylamine de coco éthoxylée,
b) 5 % en poids d'huile de ricin éthoxylée,
c) 2 % en poids d'alkylamine éthoxylée en C16-18 et
d) 8 % en poids de la composition d'agents tensioactifs de nature polymère:
4 % en poids de sels de phosphate de diéthanolamine d'alcool polyéthoxylé en C12-14, et
2 % en poids d'alcool éthoxylé linéaire en C9-11, et
2 % en poids de sel de sodium de monoester d'acide succinique de nonylphénol oxéthylé.
